# NEUE EUROPÄISCHE PATENTSCHRIFT

(11) **EP 1 035 642 B2**
(45) Veröffentlichungstag und Bekanntmachung des Hinweises auf die Entscheidung über den Einspruch: **27.03.2013**
(45) Hinweis auf die Patenterteilung: 20.06.2007
(21) Anmeldenummer: 00100094.2
(22) Anmeldetag: 07.01.2000
(51) Int. Cl.: H02M 7/5395

(54) **Pulsweitenmodulation zum Betrieb eines Drehstromumrichters für Drehstrommotoren**
Pulse width modulation for driving an inverter for AC motors
Modulation de largeur d'impulsion pour contrôler un onduleur pour moteur AC

(30) Priorität: 09.03.1999 DE 19910327
(43) Veröffentlichungstag der Anmeldung: 13.09.2000
(73) Patentinhaber: Jungheinrich Aktiengesellschaft, 22047 Hamburg (DE)
(72) Erfinder: Schlüter, Volkmar, Dipl.-Ing., 24558 Henstedt-Ulzburg (DE); Wrede, Hans, Dipl.-Ing., 22844 Norderstedt (DE); Baginski, Ralf, Dipl.-Ing., 21398 Neetze (DE); Freitag, Frank, Dipl.-Ing., 22393 Hamburg (DE); Mänken, Frank, Dr.-Ing., 24558 Henstedt-Ulzburg (DE)
(74) Vertreter: Hauck Patent- und Rechtsanwälte

(56) Entgegenhaltungen:
- HOLMES D G: "THE GENERAL RELATIONSHIP BETWEEN REGULAR-SAMPLED PULSE-WIDTH- MODULATION AND SPACE VECTOR MODULATION FOR HARD SWITCHED CONVERTERS" 9. Oktober 1992 (1992-10-09) , PROCEEDINGS OF THE INDUSTRY APPLICATIONS SOCIETY ANNUAL MEETING,US,NEW YORK, IEEE, VOL. -, PAGE(S) 1002-1009 XP000368904ISBN: 0-7803-0635-X * Seite 1005, linke Spalte, Absatz 2 * * Abbildungen 6A,6B *
- HANDLEY P G, BOYS J T: "Space vector modulation: an engineering review" Juli 1990 (1990-07) , FOURTH INTERNATIONAL CONFERENCE ON POWER ELECTRONICS AND VARIABLE-SPEED DRIVES , UK, LONDON XP002139656 * Seite 89, rechte Spalte, Absatz 3 *
- 'dsp in motion control', 09 Juni 1997, PCIM INT. CONF., NURNBERG Seite SEMINAR6

## Beschreibung

Die Erfindung bezieht sich auf ein Verfahren zum Betrieb eines Drehstromumrichters nach dem Oberbegriff des Patentanspruchs 1.

Der Leistungsteil eines Drehstromumrichters oder -wechselrichters besteht üblicherweise aus drei Brückenanordnungen mit Leistungstransistoren, zumeist des Typs MOS oder IGBT. Jede Brücke enthält einen Transistor oder eine Mehrzahl parallelgeschalteter Transistoren, welche mit dem positiven Potential und einen Transistor oder eine Mehrzahl von parallelgeschalteten Transistoren, welche mit dem negativen Potential verbunden sind. Erstere werden als High-Side-Transistoren und letztere als Low-Side-Transistoren bezeichnet. Jeweils eine Drehstromphase ist an der Verbindung zwischen einem High-Side- und einem Low-Side-Transistor angeschlossen.

Die Ansteuerungselektronik für die Leistungstransistoren benötigt ein Bezugspotential. Das gleiche trifft auf einen Meßverstärker zu, der mit dem Shunt in einer Phase verbunden ist zur Messung des zum Motor fließenden Stroms für die Regelung. Es ist bekannt, die Versorgung und Ansteuerung dieser Baugruppen durch Potentialtrennung vorzunehmen. Hierfür ist ein hoher Aufwand erforderlich.

Eine andere Möglichkeit besteht darin, eine sogenannte Ladungspumpe vorzusehen.

Die Ansteuerung der Low-Side-Transistoren kann problemlos erfolgen, weil diese die gleiche negative Stromzuführung als Bezugspotential aufweisen wie der Steuerteil und die Stromversorgung hierfür. Ein Problem entsteht jedoch bei der Ansteuerung der High-Side-Transistoren und der Ansteuerung bzw. Versorgung des Meßverstärkers für den Strom. Das Bezugspotential zur Ansteuerung der High-Side-Transistoren ist deren Source bzw. Emitteranschluß, welcher mit dem Drain- bzw. Kollektoranschluß der Low-Side-Transistoren verbunden ist und mit ggf. zwischengeschaltetem Strommeßshunt den Anschluß einer Motorphase bildet. Aufgrund der schnellen Schaltvorgänge der Transistoren springt das Bezugspotential der High-Side-Transistoren einer jeden Brückenanordnung zwischen den Potentialen der negativen und positiven Stromzuführung hin und her. Das gleiche betrifft das Bezugspotential und die Meßeingänge des Strommeßverstärkers. Ohne besondere Schaltungsmaßnahmen ist eine Ansteuerung und Versorgung des Meßverstärkers aus einer Stromversorgung mit festem Bezugspotential nicht möglich.

Ein Umrichter der beschriebenen Art soll mit Hilfe der geschalteten Transistoren einen kontinuierlichen Spannungsverlauf erzeugen. Dazu bedarf es eines Modulationsverfahrens, das die Transistoren in einer hohen Trägerfrequenz schaltet, beispielsweise 16 kHz, um in einem unteren Frequenzbereich ein kontinuierliches Nutzsignal zu erzeugen, beispielsweise ein Nutzsignal von 50 Hz Sinus. Die Anforderungen an das Modulationsverfahren sind:
Variable Spannung mit möglichst guter Ausnutzung der Betriebsspannung
Variable Frequenz einschließlich Gleichspannung
Beliebige, auch nicht sinusförmige Signalformen
Geringe Schalthäufigkeit, um Umschaltverluste kleiner zu halten.

Ein Modulationsverfahren, das diesen Anforderungen genügt, ist die bekannte Raumzeigermodulation. Außer im Fall eines vollständig gesperrten Wechselrichters lassen sich mit dem beschriebenen Umrichter 2³ = 8 verschiedene Schaltzustände herstellen, in denen entweder ein High-Side-Transistor oder ein Low-Side-Transistor aktiv ist. Wenn die drei Phasen auf einem Kreis um jeweils 120° räumlich verschoben angeordnet sind, lassen sich die Schaltzustände durch Spannungsraumzeiger darstellen. Zwei Zustände, in denen entweder die High-Side- oder die Low-Side-Transistoren alle aktiv sind, werden als Nullvektoren bezeichnet. Die anderen sechs Vektoren, die Basisvektoren, spannen ein regelmäßiges Sechseck auf.

Um einen beliebigen Spannungswert innerhalb des Sechsecks zu erzeugen, wird nach Art der symmetrischen Pulsweitenmodulation innerhalb der Trägerperiodendauer zwischen benachbarten Basisvektoren und einem Nullvektor umgeschaltet. Bei diesem Verfahren wird bei jedem Schaltvorgang nur eine Halbbrücke umgeschaltet, was zu geringen Schaltverlusten führt. Der Artikel "The General Relationship between Regular-Sampled Pulse-Width-Modulation and Space Vector Modulation for Hard Switched Converters von Donald Holmes (Proceedings of the Industry Applications Annual Meeting, IEEE, US, New York, 9.10.1992, p.1002-1009) beschreibt ein solches Verfahren. Bei der Raumzeigermodulation der beschriebenen Art tritt jedoch der Fall ein, daß in bestimmten Sektoren die High-Side-Transistoren dauerhaft angesteuert werden, beispielsweise in den ungeradzahligen Sektoren. Während bei der Ansteuerung der Low-Side-Transistoren die Kondensatoren der Ladungspumpe in den Schaltpausen (bei 60° in einem Zyklus von 360° keine Pulsung) aufgeladen werden können, ist dies nicht der Fall bei der Ansteuerung aller High-Side-Transistoren.

Weiterhin besteht das Problem, daß wenn alle Transistoren gesperrt sind, dies auch für die Low-Side-Transistoren gilt. In diesem Fall können die Kondensatoren der Ladungspumpen der High-Side-Ansteuerelektronik und des Strommeßverstärkers nicht aufgeladen werden. Nach Freigabe des Wechselrichters wird daher der Strommeßverstärker nicht sofort versorgt. Dies hat zur Folge, daß ein gefordertes Anfahrmoment nicht sofort zur Verfügung steht.

Schließlich besteht die Gefahr der Zerstörung von High-Side-Transistoren, deren Ansteuerelektronik aufgrund der besonderen Modulation nicht sofort versorgt werden kann (Raumzeigermodulation mit Schaltpausen während 60° eines Zyklus).

Aus der Seminarunterlagen der Konferenz, PCIM International Conference, Nürnberg 1997, SEMINAR NOTES, Seminar 6, "DSP IN MOTION CONTROL" ist ein Verfahren mit Merkmalen des Oberbegriffes des Anspruchs 1 bekannt geworden.

Der Erfindung liegt die Aufgabe zugrunde, ein Verfahren zum Betrieb eines Drehstromumrichters nach der Raumzeigermodulation anzugeben, bei dem alle Transistoren und der Meßverstärker eines Strommeßshunts aus einer Steuerelektronik und Stromversorgung ohne Potentialtrennung angesteuert bzw. versorgt werden können.

Diese Aufgabe wird durch die Merkmale des Patentanspruchs 1 gelöst.

Bei dem erfindungsgemäßen Verfahren werden in den ungeradzahligen Sektoren des Zeigerdiagramms die Basisvektoren in einer ersten Drehrichtung und in den geradzahligen Sektoren in der entgegengesetzten Drehrichtung angelegt derart, daß der Nullvektor nur durch Einschalten der an Minuspotential liegenden Transistoren erzeugt wird. Durch das erfindungsgemäße Verfahren ist sichergestellt, daß der Nullvektor durch das Einschalten aller Low-Side-Transistoren erzeugt wird. Auf diese Weise ist die vorteilhafte Versorgung von Elektroniken mit "springenden Potentialen" durch "Pumpen" von Ladung mittels einer Ladungspumpe, gebildet aus Speicherkondensator und Diode, möglich geworden.

Bei der Erfindung ist der springende Bezugsleiteranschluß der Kondensatoren der Ladungspumpen, der mit der Motorphase verbunden ist, im Fall des gesperrten Wechselrichters durch einen Hilfstransistor auf das Potential der negativen Stromführung gelegt.

Die Erfindung wird nachfolgend anhand von in Zeichnungen dargestellten Ausführungsbeispielen näher erläutert.
- Fig. 1: zeigt einen Wechselstrom-Umrichter mit drei Halbbrücken.
- Fig. 2: zeigt eine Halbbrücke nach Fig. 1 mit dem Prinzipschaltbild einer Ladungspumpe.
- Fig. 3: zeigt eine Halbbrücke nach Fig. 1 mit Ladungspumpe und einem Strommeßverstärker.
- Fig. 4: zeigt ein Raumzeigerdiagramm einer Raumzeigermodulation für einen Umformer nach Fig. 1.
- Fig. 5: zeigt ein Diagramm für die Raumzeigermodulation im Sektor 1 nach Fig. 4.
- Fig. 6: zeigt eine Raumzeigermodulation in Sektor 2 nach Fig. 4.
- Fig. 7: zeigt eine erfindungsgemäße Modulation in Sektor 1 nach Fig. 4.
- Fig. 8: zeigt ein ähnliches Schaltbild wie Fig. 1, jedoch mit einem zusätzlichen Schaltungsteil.
- Fig. 9: zeigt das Diagramm einer gefilterten Ausgangsspannung einer Phase des Umrichters nach Fig. 1 mit einer Raumzeigermodulation nach Fig. 5 und 6.
- Fig. 10: zeigt die gefilterte Ausgangsspannung einer Phase nach der erfindungsgemäßen Modulation.

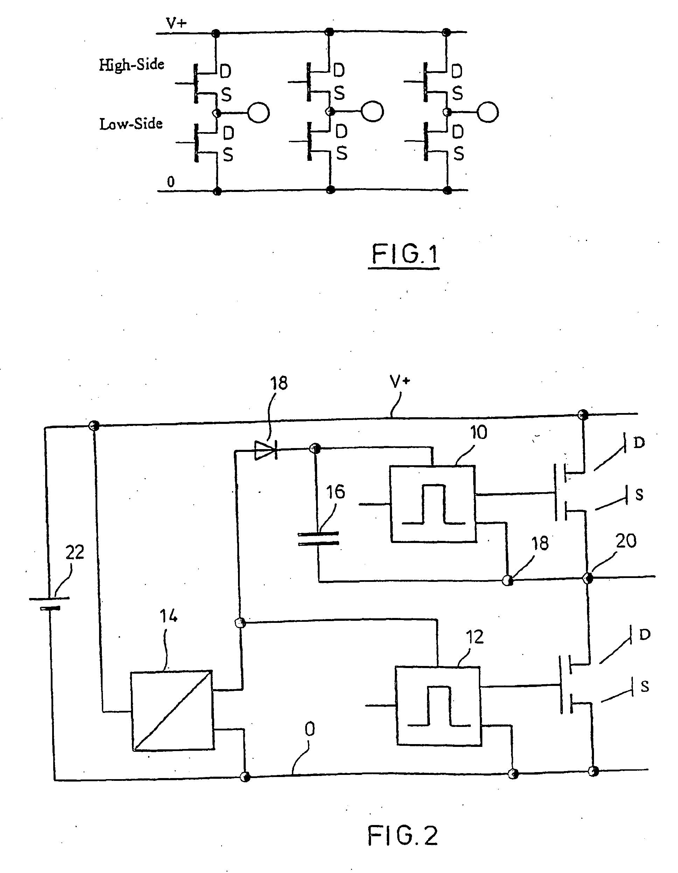

In Fig. 1 ist ein Drehstromwechselrichter mit drei Halbbrücken dargestellt, von denen jede zwei MOSFETs enthält. Die an positives Potential V+ angeschlossenen Transistoren sind High-Side-Transistoren und die mit Minuspotential verbundenen Transistoren sind Low-Side-Transistoren. An den Verbindungen zwischen Source und Drain der Transistoren einer Brücke ist jeweils eine Motorphase angeschlossen. Der Drehstrommotor, beispielsweise Antriebs- oder Hubmotor in einem Flurförderzeug, ist nicht dargestellt.

In Fig. 2 ist eine Halbbrücke nach Fig. 1 dargestellt. Man erkennt ferner elektronische Ansteuerschaltungen 10, 12 für die beiden Transistoren sowie eine Stromversorgung 14 für die Schaltungen 10, 12. Die Ansteuerschaltung 10 erhält ihre Stromversorgung aus einem Kondensator 16, der über eine Diode 18 an der Stromversorgung 14 liegt. Das Bezugspotential der Ansteuerschaltung 10, wie bei 18 dargestellt, ist auf dem gleichen Potential wie ein Verbindungspunkt 20 zwischen der Source des High-Side-Transistors und dem Drain des Low-Side-Transistors und damit einer Phase. Das Bezugspotential für die Steuerschaltung 10 ist das Minuspotential der mit 22 bezeichneten Batterie, welche den Drehstrommotor mit Energie versorgt.

Die Transistoren werden durch die Steuerschaltungen 10, 12 wechselweise geschaltet. Dadurch springt das Potential der Punkte 18 bzw. 20 zwischen positiver und negativer Stromzuführung hin und her. Der Kondensator 16 kann nur aufgeladen werden, wenn der Low-Side-Transistor ein- und der High-Side-Transistor ausgeschaltet ist. Dann kann der Strom aus der Stromversorgung 14 über die Diode 18 den Kondensator 16 aufladen. Wenn der High-Side-Transistor ein- und der Low-Side-Transistor ausgeschaltet ist, befindet sich das "springende Bezugspotential" 18 auf dem Potential der positiven Stromzuführung. Nun kann die Steuerschaltung 10 nur aus dem Kondensator 16 versorgt werden, denn Diode 18 befindet sich im Sperrzustand. Man bezeichnet dies als Pumpvorgang, weil Ladung von einem niedrigen Potential zu einem höheren "gepumpt" wird.

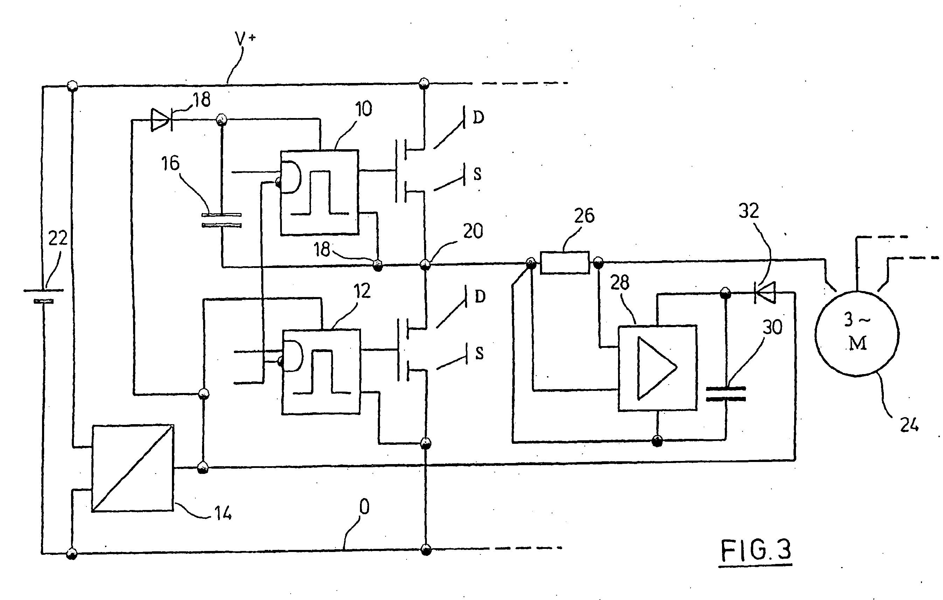

Soweit bei der Schaltungsanordnung nach Fig. 3 gleiche Komponenten verwendet werden wie bei der nach Fig. 2, sind auch gleiche Bezugszeichen vorgesehen. Man erkennt einen Drehstrommotor 24, der an einer Phase des Umrichters liegt, wobei ein Meßshunt 26 für die Strommessung in der Phase vorgesehen ist. Die Strommessung erfolgt mit Hilfe eines Meßverstärkers 28. Das Bezugspotential für den Meßverstärker 28 und die Meßeingänge des Verstärkers 28 ändern sich mit dem Potential am Punkt 20. Die Versorgung des Meßverstärkers 28 erfolgt über den Anschluß 20 bzw. einen Kondensator 30, der über eine Diode 32 aufgeladen wird.

Aufgrund der schnellen Schaltvorgänge der Transistoren springt das Bezugspotential (springendes Potential) hin und her, so daß auch das Bezugspotential und die Meßeingänge für den Meßverstärker 28 springen. Ohne besondere Schaltungsmaßnahmen ist eine Ansteuerung und Versorgung des Meßverstärkers 28 mit festem Bezugspotential nicht möglich.

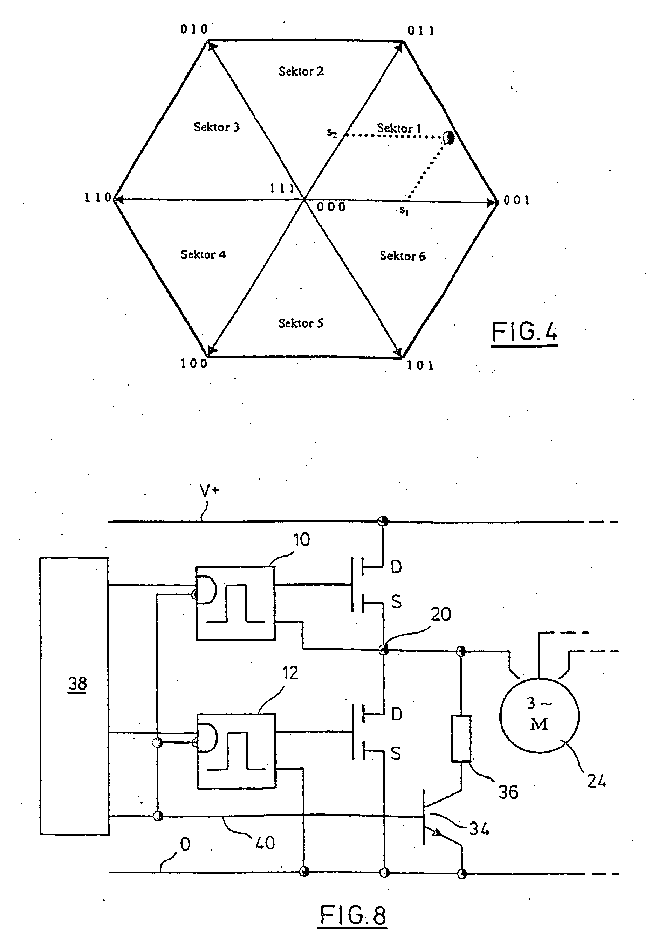

In Fig. 4 ist das Raumzeigerdiagramm einer Raumzeigermodulation dargestellt. Die Ansteuerung des High-Side-Transistors ist mit der Ziffer 1 und die des Low-Side-Transistors mit der Ziffer 0 gekennzeichnet. Der Zustand des Umrichters mit seinen drei Phasen läßt sich dann als Tripel angeben, z. B. 0 0 1. Da die drei Phasen eines Drehstroms auf einem Kreis um jeweils 120° verschoben räumlich als Zeiger dargestellt werden können, ergeben sich für die einzelnen Schaltzustände des Umrichters nach Fig. 1 sechs Vektoren, die auch als Basisvektoren bezeichnet werden und die ein regelmäßiges Sechseck aufspannen. Zwei Zustände, nämlich Ansteuerung aller High-Side- oder Low-Side-Transistoren (1 1 1 bzw. 0 0 0) werden als Nullvektoren bezeichnet. Zwischen den Basisvektoren liegen sechs Sektoren, die in Fig. 4 entsprechend bezeichnet sind.

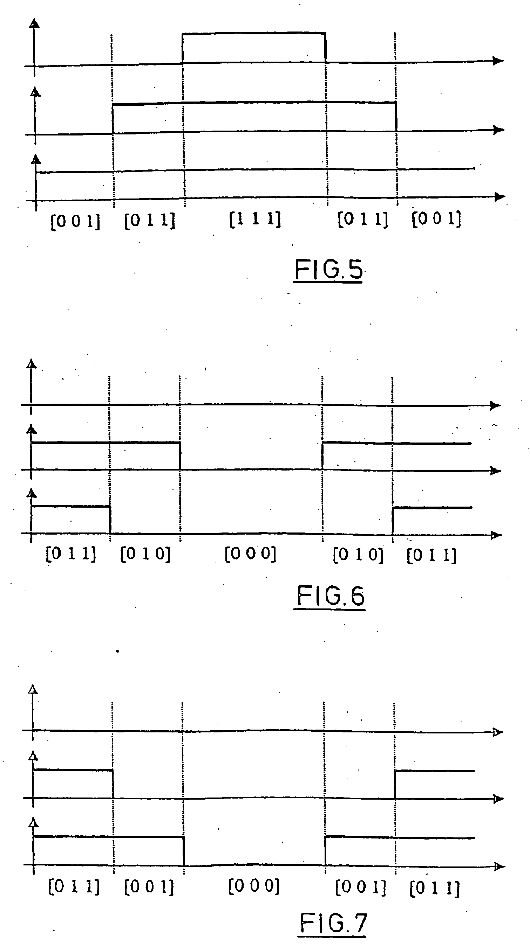

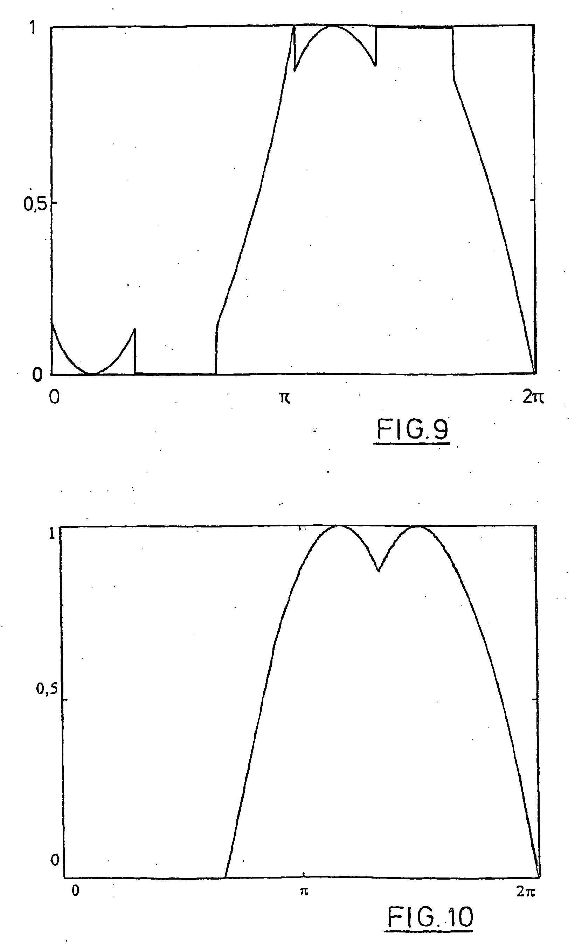

Um einen beliebigen Spannungswert innerhalb des Sechsecks zu erzeugen, wird bei der symmetrischen Pulsweitenmodulation innerhalb der Trägerperiodendauer zwischen benachbarten Basisvektoren und einem Nullvektor umgeschaltet. Dies ist in Fig. 5 für den Sektor 1 dargestellt. Gegen den Uhrzeigersinn wird zuerst der Vektor 001, dann der Vektor 0 1 1 und bis zur Mitte der Periode der Nullvektor 1 1 1 geschaltet. In der zweiten Periodenhälfte wird symmetrisch verfahren. Bei jedem Schaltvorgang wird nur eine Halbbrücke des Umrichters nach Fig. 1 umgeschaltet, was zu geringen Schaltverlusten führt. In Fig. 6 ist die Schaltfolge im Sektor 2 dargestellt. Hier ist der geeignete Nullvektor 0 0 0, wenn wiederum die Basisvektoren gegen den Uhrzeigersinn angelegt werden. Fig. 9 zeigt den Spannungsverlauf der Phase, bei dem die Trägerfrequenz gefiltert wurde und bei dem der Spannungszeiger dem Innenkreis des in Fig. 4 dargestellten Sechsecks folgt. Phasen 2 und 3 sind um 120° phasenverschoben. Das Beispiel beschreibt die harmonische Ansteuerung des Drehstrommotors mit maximaler Amplitude.

Bei der Raumzeigermodulation nach der Erfindung werden gemäß Fig. 4 und Fig. 7 in einem ungerade bezeichneten Sektor die Basisvektoren im Uhrzeigersinn, in einem geraden gegen Uhrzeigersinn angelegt. Man stellt auf diese Weise sicher, daß der Nullvektor nur durch das Einschalten aller Low-Side-Transistoren erzeugt wird. Dies ist gut aus Fig. 7 zu erkennen. Fig. 10 zeigt den Spannungsverlauf der Phase 1 entsprechend Fig. 9, jedoch bei dem erfindungsgemäßen Verfahren.

Die in Fig. 8 dargestellte Schaltungsanordnung enthält gleiche Komponenten wie Fign. 2 und 3, sie ist daher mit gleichen Bezugszeichen versehen. Ein Hilfstransistor 34, der zwischen Verbindungspunkt 20 und Minuspotential liegt und dem ein Widerstand 36 in Reihe geschaltet ist, wird von einer Ansteuerelektronik 38 für die Steuerschaltungen 10 und 12 für die gezeigte Halbbrücke ebenfalls mit einem Sperrsignal über eine Leitung 40 beaufschlagt, wenn der Wechselrichter gesperrt wird. Durch das Sperrsignal wird der Hilfstransistor 34 angesteuert und am Punkt 20 ein Potential erzeugt, das zum Beispiel auf der Hälfte der positiven Stromzuführung V+ liegt. Dieses Potential dient als Bezugspotential für die Steuerschaltung 10 bzw. den in Fig. 8 nicht dargestellten Meßverstärker (siehe Position 28 nach Fig. 3). Die in Fig. 8 gezeigte Schaltungsanordnung bewirkt, daß nach Aufhebung des Sperrsignals die Speicherkondensatoren der Ladungspumpen (siehe Fig. 3) aufgeladen sind.

Es genügt, wenn nur mit einer Motorphase ein Hilfstransistor 34 verbunden ist. Die anderen Motorphasen haben durch die entsprechenden Wicklungsstränge des Motors Verbindung. Der Widerstand 36 hat die Aufgabe, den Strom im Umschaltaugenblick zu begrenzen.

## Patentansprüche

1. Verfahren zum Betrieb eines Drehstromumrichters, der in drei Halbbrücken jeweils mindestens zwei Leistungstransistoren aufweist zur Erzeugung eines Drehstroms aus Gleichstrom für Drehstrommotoren, insbesondere in Flurförderzeugen, bei dem zur Erzeugung beliebiger Spannungswerte die Leistungstransistoren nach der Raumzeigermodulation mit hoher Trägerfrequenz nach Art der symmetrischen Pulsweitenmodulation (PWM) innerhalb der Trägerperiodendauer zwischen zwei benachbarten Basisvektoren und einem Nullvektor eines Sektors umgeschaltet werden, wobei in den ungeradzahligen Sektoren die Basisvektoren in einer ersten Drehrichtung und in den geradzahligen Sektoren in der entgegengesetzten Drehrichtung angelegt werden derart, dass der Nullvektor nur durch Einschalten der am Minuspotential liegenden Transistoren erzeugt wird, **dadurch gekennzeichnet, dass** die Spannungsversorgung einer Ansteuerelektronik (10) der Transistoren mit Hilfe einer einen Kondensator (16) und eine Diode (18) enthaltenden Ladungspumpe erfolgt, die mit einem Verbindungspunkt (20) zwischen den Transistoren einer Halbbrücke verbunden ist, und mit Hilfe eines Sperrsignals für alle Transistoren ein Hilfstransistor (34) angesteuert wird, der den Verbindungspunkt (20) zwischen den Transistoren der Halbbrücke über einen Begrenzungswiderstand (36) mit dem Minuspotential verbindet.

2. Verfahren nach Anspruch 1, **dadurch gekennzeichnet, dass** die Spannungsversorgung eines mit einem Shunt in einer Phase verbundenen Messverstärkers (28) mit Hilfe einer einen Kondensator (30) und eine Diode (32) enthaltenden Ladungspumpe erfolgt, die mit dem Verbindungspunkt (20) zwischen den Transistoren einer Halbbrücke verbunden ist, und mit Hilfe des Sperrsignals für alle Transistoren ein Hilfstransistor angesteuert wird, der den Verbindungspunkt zwischen den Transistoren der Halbbrücke mit dem Minuspotential über einen Begrenzungswiderstand verbindet.

## Claims

1. A method for the operation of a three-phase current inverter which has at least two power transistors each in three half-bridges, for generating a three-phase alternating current from a direct current for use in three-phase motors, particularly in industrial trucks, wherein the power transistors are switched over, for the generation of random voltage values, between two adjacent base vectors and a zero vector of a sector according to the space vector modulation of a high carrier frequency in the fashion of symmetric pulse width modulation (PWM) within the carrier period duration, wherein the base vectors are applied in a first sense of rotation in the odd-numbered sectors and in an opposite sense of rotation in the even-numbered sectors such that the zero vector is produced only by switching on the transistors located at the negative potential, **characterized in that** the voltage supply of a driving electronics (10) of the transistors is effected by means of a charging pump including a capacitor (16) and a diode (18), wherein the charging pump is connected to a coupling point (20) between the transistors of a half-bridge, and an inhibiting signal for all transistors helps drive an auxiliary transistor (34) which connects the coupling point (20) between the transistors of the half-bridge to the negative potential via a limiting resistor (36).

2. The method according to claim 1, wherein the voltage supply of a measuring amplifier (28) connected to a shunt in one phase is performed by means of a charging pump including a capacitor (30) and a diode (32), wherein the charging pump is connected to the coupling point (20) between the transistors of a half-bridge and an inhibiting signal for all transistors helps drive an auxiliary transistor (34) which connects a coupling point between the transistors of a half-bridge to the negative potential via a limiting resistor (36).

## Revendications

1. Procédé destiné à faire fonctionner un commutateur de courant triphasé, qui présente respectivement au moins deux transistors de puissance dans trois demi-ponts en vue de générer un courant triphasé à partir d'un courant continu pour des moteurs à courant triphasé, en particulier dans des chariots de manutention, dans lequel en vue de générer n'importe quelles valeurs voltmétriques, les transistors de puissance sont commutés après la modulation du pointeur d'espace avec fréquence porteuse élevée à la manière de la modulation d'impulsions en largeur symétrique (PWM) au cours de la durée de période de la porteuse entre deux vecteurs de base consécutifs et un vecteur nul d'un secteur, dans les secteurs impairs, les vecteurs de base sont appliqués dans un premier sens de rotation et dans les secteurs pairs dans le sens de rotation opposé de telle manière que le vecteur nul n'est généré que via mise sous tension des transistors se trouvant au niveau du potentiel négatif, **caractérisé en ce que** l'alimentation en courant de l'électronique (10) des transistors est effectuée à l'aide d'une pompe de charge comportant un condensateur (16) et une diode (18), et à l'aide du signal de blocage pour tous les transistors est amorcé un transistor auxiliaire (34) qui relie un point de jonction (20) entre les transistors d'un demi-pont avec le potentiel négatif par l'intermédiaire d'une résistance de limitation (36)

2. Procédé selon la revendication 1, dans lequel l'alimentation en courant d'un amplificateur de mesure (28) relié à un shunt (26) dans une phase est effectuée à l'aide d'une pompe de charge comportant un condensateur (30) et une diode (32), et à l'aide du signal de blocage pour tous les transistors est amorcé un transistor auxiliaire (34) qui relie un point de jonction (20) entre les transistors d'un demi-pont avec le potentiel négatif par l'intermédiaire d'une résistance de limitation (36).
